# EUROPÄISCHE PATENTSCHRIFT

(11) **EP 0 451 709 B1**
(45) Veröffentlichungstag und Bekanntmachung des Hinweises auf die Patenterteilung: **08.12.1999**
(21) Anmeldenummer: 91105355.1
(22) Anmeldetag: 04.04.1991
(51) Int. Cl.: C07F 7/18, C08F 230/08, C08G 77/20, C08G 77/22

(54) **Silane, Verfahren zu ihrer Herstellung und ihre Verwendung zur Herstellung von Polymerisaten und Polykondensaten**
Silanes, process for their preparation and their use for preparing polymers and polycondensates
Silane, procédé pour leur préparation et leur utilisation dans la préparation de polymères et de polycondensats

(30) Priorität: 05.04.1990 DE 4011044
(43) Veröffentlichungstag der Anmeldung: 16.10.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: Wolter, Herbert, W-6975 Gerchsheim (DE); Rose, Klaus, W-8710 Kitzingen (DE); Egger, Christian, W-8706 Höchberg (DE)

(56) Entgegenhaltungen:
- EP-A- 0 018 624
- EP-A- 0 075 957
- EP-A- 0 230 342
- EP-A- 0 243 802
- EP-A- 0 298 734
- EP-A- 0 417 568
- EP-A- 0 424 960
- DE-A- 2 655 877
- US-A- 4 650 889
- US-A- 4 849 462
- CHEMICAL ABSTRACTS, vol. 112, 1990, Columbus, Ohio, US; abstract no. 8311d, KADOWAKI, T. ET AL. Seite 29 ;

## Beschreibung

Handelsübliche Silane mit reaktiven Doppelbindungen stellen im allgemeinen monofunktionelle Verbindungen mit einer C=C-Doppelbindung dar, z. B. (Meth)acryloxysilane des folgenden Typs: 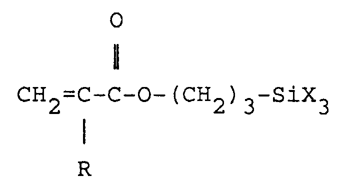 wobei R Wasserstoff oder Methyl bedeutet und X z. B. Halogen oder Alkoxy ist.

Silane dieses Typs stellen in der Regel niedermolekulare und somit vor der Si-X-Hydrolyse und Kondensation relativ flüchtige Verbindungen dar, die aufgrund der vorhandenen Acrylgruppe toxikologisch bedenklich sind. Bei der Weiterverarbeitung durch Polymerisation oder modifizierende Funktionalisierung haben diese Silane außerdem den Nachteil, daß aufgrund der Anwesenheit nur einer aktiven C=C-Doppelbindung lediglich Kettenpolymere erhältlich sind und bei vorheriger Funktionalisierung diese für die organische Polymerisation notwendige C=C-Doppelbindung meist verloren geht. Ferner befindet sich zwischen der Doppelbindung und dem zur Bildung eines anorganischen Netzwerks befähigten Silicium in der Regel nur eine kurze Kette, so daß die mechanischen Eigenschaften (Flexibilität etc) über die organischen Gruppen nur in engen Grenzen variierbar sind.

In der DE-A-2655877 wird ein Verfahren zur Herstellung von aliphatische Doppelbindungen enthaltenden Organosilanen beschrieben. Bei den erhaltenen Silanen werden drei Allylgruppierungen über ein Bindeglied -OR- mit R gleich Alkylen an das Siliciumatom gebunden.

In der EP-A-298734 werden Organosilane beschrieben, die Urethangruppierungen und eine Acrylat- und/oder Methacrylatgruppe enthalten. Auch in der EP-A-243802 werden Silane mit Urethangruppierungen beschrieben, die aus Isocyanatalkylsilan-Verbindungen und Hydroxyl-haltigen (Meth)acrylsäureestern erhalten werden. In der US-A-4650889 werden ebenfalls Organosilane beschrieben, die aus der Umsetzung eines Aminoorganosilans mit einem Isocyanat-haltigen Acryl- oder Methacrylsäureester erhalten werden.

EP-A-230342 betrifft acryl-funktionalisierte Siliciumverbindungen, die durch Umsetzung von Amino-funktionellen Siliciumverbindungen mit di- oder multifunktionellen Acrylverbindungen durch eine Michael-Reaktion erhalten werden.

In der EP-A417586, die gemäß Art. 54(3) EPÜ Stand der Technik ist, werden Silanderivate beschrieben, die durch Hydrosilylierung von entsprechenden (Meth)acrylamiden hergestellt werden. Dabei wird als spezielles (Meth)acrylamid CH₂=C(H,CH₃)-CONH-CH₂-NHCO-C(H,CH₃)=CH₂ genannt.

Aufgabe der Erfindung war es, neue organisch modifizierte Silane bereitzustellen, bei denen der Abstand zwischen Silicium und der reaktiven Doppelbindung beliebig einstellbar ist und die mehrere reaktive Doppelbindungen mit der Möglichkeit einer dreidimensionalen Vernetzung sowie andere funktionelle Gruppen enthalten können, welche eine gezielte Anpassung an das gewünschte Anwendungsgebiet gestatten.

Gegenstand der Erfindung sind Silane der allgemeinen Formel (I):

{XₐR_{b}Si[R'(A)_{c}]_{(0 oder 1)}}ₓB (I)

in der die Reste und Indices folgende Bedeutung haben:
- X:: Wasserstoff, Halogen, Hydroxy, Alkoxy, Acyloxy, Alkylcarbonyl, Alkoxycarbonyl oder -NR"₂;
- R:: Alkyl, Alkenyl, Aryl, Alkylaryl oder Arylalkyl;
- R':: Alkylen, Arylen oder Alkylenarylen;
- R":: Wasserstoff, Alkyl oder Aryl;
- A:: S, PR", POR", NHC(O)O oder NHC(O)NR";
- B:: geradkettiger oder verzweigter organischer Rest, der sich von einer Verbindung B' mit mindestens zwei C=C-Doppelbindungen und 5 bis 50 Kohlenstoffatomen ableitet, ausgenommen die Verbindung B' der Formel : CH₂=C(H,CH₃)-CONH-CH₂-NHCO-C(H,CH₃)=CH₂, wenn B direkt an das Si-Atom gebunden ist;
- a:: 1, 2 oder 3;
- b:: 0, 1 oder 2, wobei (a + b) = 3;
- c:: 0 oder 1;
- x:: ganze Zahl größer 0, deren Maximalwert der Anzahl von C=C-Doppelbindungen in der Verbindung B' minus 1 entspricht bzw. gleich der Anzahl von C=C-Doppelbindungen in der Verbindung B' ist, wenn c = 1 und A für NHC(O)NR" oder NHC(O)O steht;
erhältlich durch
a) eine Additionsreaktion eines Silans der allgemeinen Formel (II):

   XₐR_{b}SiR'Y (II)

   in der X, R, R', a und b die oben genannte Bedeutung haben und Y die Gruppe SH, PR"H oder POR"H bedeutet, mit der Verbindung B'; oder
b) eine Kondensationsreaktion eines Silans der allgemeinen Formel (III):

   XₐR_{b}SiR'NCO (III)

   in der X, R, R', a und b die oben genannte Bedeutung haben, mit einer Hydroxyl- oder Amino-substituierten Verbindung B'; oder
c) eine Hydrosilylierungsreaktion eines Silans der allgemeinen Formel (IV):

   XₐR_{b}SiH (IV)

   in der X, R, a und b die oben genannte Bedeutung haben, mit einer Verbindung B', bei der die C=C-Doppelbindungen Acrylat- und/oder Methacrylatgruppen sind.

### Definitionen

Die Alkylreste sind z.B. geradkettige, verzweigte oder cyclische Reste mit 1 bis 20, vorzugsweise 1 bis 10 Kohlenstoffatomen und vorzugsweise niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek-Butyl, tert-Butyl, Isobutyl, n-Pentyl, n-Hexyl, Cyclohexyl, 2-Ethylhexyl, Dodecyl und Octadecyl.

Die Alkenylreste sind z. B. geradkettige, verzweigte oder cyclische Reste mit 2 bis 20, vorzugsweise 2 bis 10 Kohlenstoffatomen und vorzugsweise niedere Alkenylreste mit 2 bis 6 Kohlenstoffatomen, wie Vinyl, Allyl und 2-Butenyl.

Bevorzugte Arylreste sind Phenyl, Biphenyl und Naphthyl. Die Alkoxy-, Acyloxy-, Alkylamino-, Dialkylamino-, Alkylcarbonyl-, Alkoxycarbonyl-, Arylalkyl-, Alkylaryl-, Alkylen-, Arylen- und Alkylenarylenreste leiten sich vorzugsweise von den oben genannten Alkyl- und Arylresten ab. Spezielle Beispiele sind Methoxy, Ethoxy, n- und i-Propoxy, n-, i-, sek- und tert-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z. B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Nitro, Epoxy, SO₃H oder PO₄H₂.

Unter den Halogenen sind Fluor, Chlor und Brom und insbesondere Chlor bevorzugt.

Für a≥ 2 bzw. b = 2 können die Reste X und R jeweils dieselbe oder eine unterschiedliche Bedeutung haben.

In bevorzugten Silanen der obigen allgemeinen Formel sind X, R, R', A, a, b, c und x wie folgt definiert:
- X:: (C₁-C₄)-Alkoxy, insbesondere Methoxy und Ethoxy; oder Halogen, insbesondere Chlor;
- R:: (C₁-C₄)-Alkyl, insbesondere Methyl und Ethyl;
- R':: (C₁-C₄)-Alkylen, insbesondere Methylen und Propylen;
- A:: S;
- a:: 1, 2 oder 3;
- [R'(A)_{c}]_{0 oder 1} :: [R'(A)_{c}]₀ für c=0 und
[R'(A)_{c}]₁ für c=1
- c:: 0 oder 1, vorzugsweise 1;
- x:: 1 oder 2.

Besonders bevorzugt ist es, wenn die Struktureinheit mit dem Index x aus Triethoxysilyl, Methyldiethoxysilyl, Methyldichlorsilyl, 3-Methyldimethoxysilyl-propylthio, 3-Trimethoxysilyl-propylthio, Methyldiethoxysilylmethylthio und Ethoxydimethylsilyl-methylthio ausgewählt ist.

Der Rest B leitet sich ab von einer substituierten oder unsubstituierten Verbindung B' mit mindestens einer bzw. mindestens zwei C=C-Doppelbindungen, z. B. Vinyl-, Allyl-, Acryl- und/oder Methacrylgruppen, und 5 bis 50, vorzugsweise 6 bis 30 Kohlenstoffatomen. Vorzugsweise leitet sich B ab von einer substituierten oder unsubstituierten Verbindung B' mit zwei oder mehreren Acrylat- und/oder Methacrylatgruppen (derartige Verbindungen werden im folgenden als (Meth)acrylate bezeichnet).

Falls die Verbindung B' substituiert ist, können die Substituenten unter den oben genannten Substituenten ausgewählt sein.

Zur Herstellung von erfindungsgemäßen Mono(meth)acryloxysilanen werden Verbindungen B' mit zwei C=C-Doppelbindungen, zur Herstellung von Poly(meth)acryloxysilanen solche mit mindestens drei C=C-Doppelbindungen eingesetzt. Spezielle Beispiele für derartige Verbindungen sind die folgenden (Meth)acrylate:

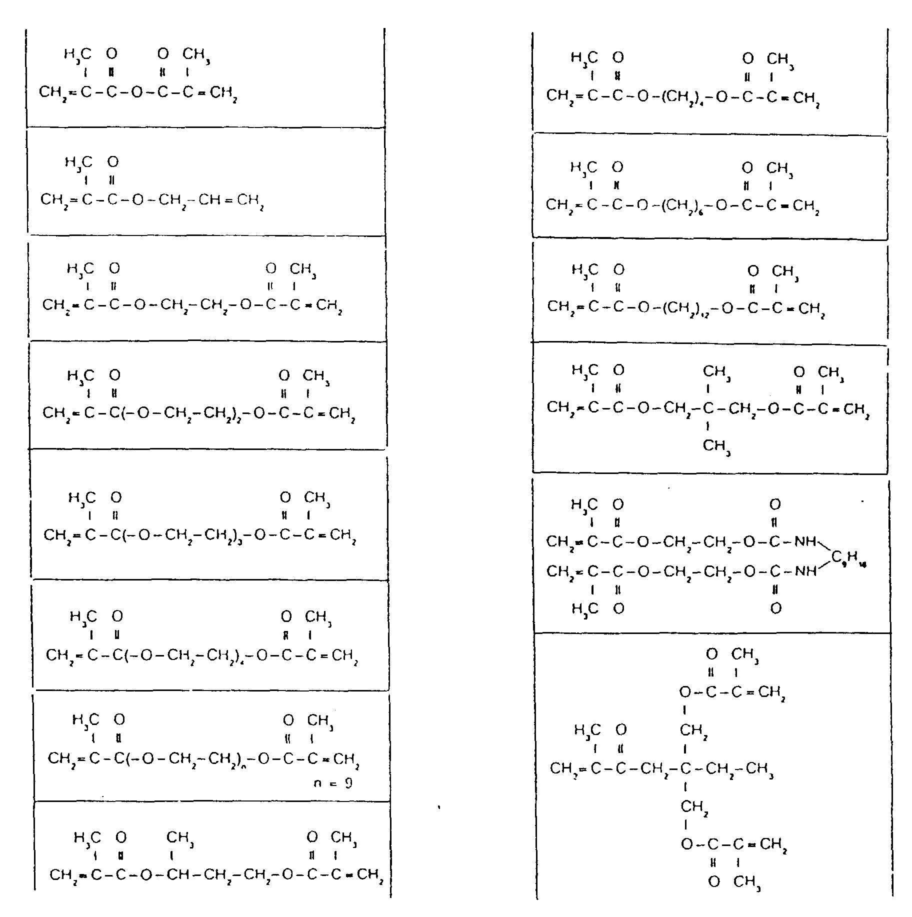

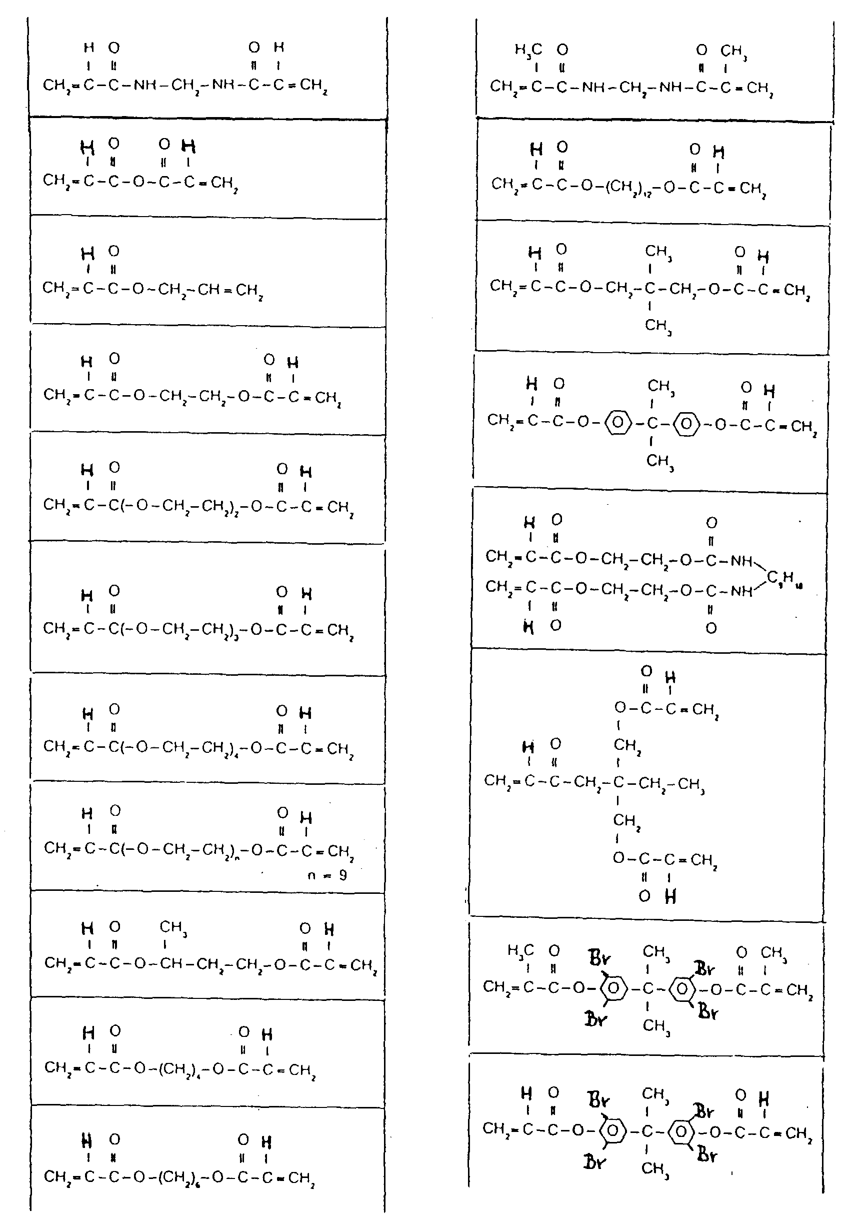

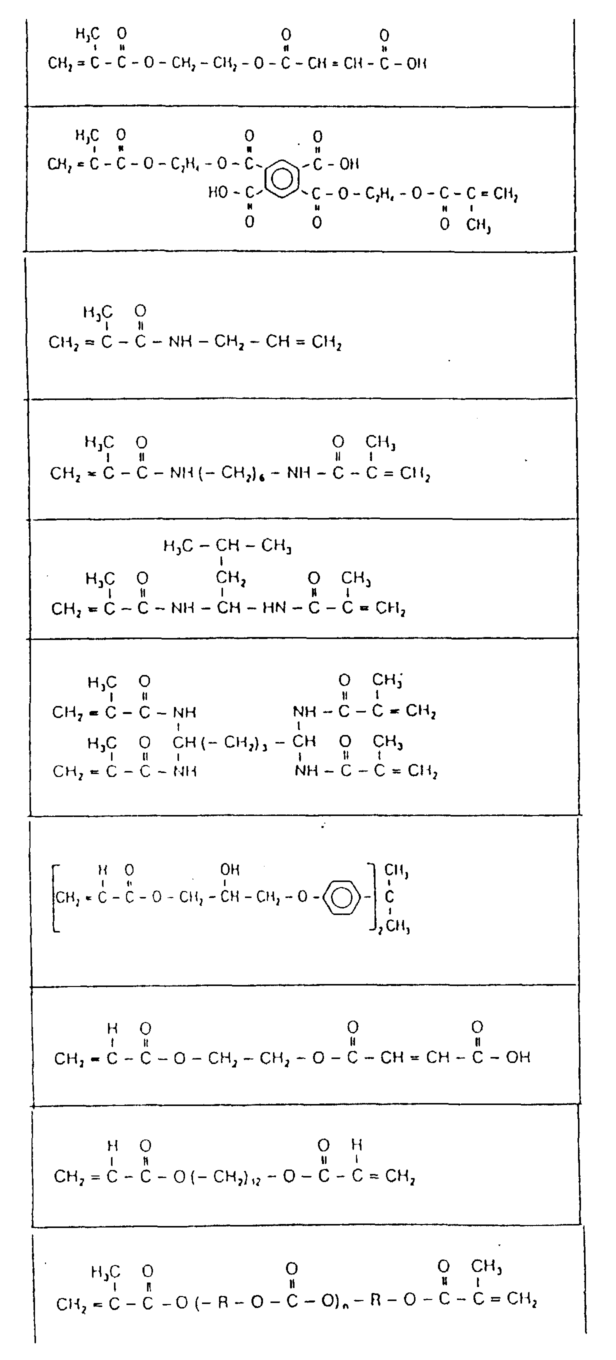

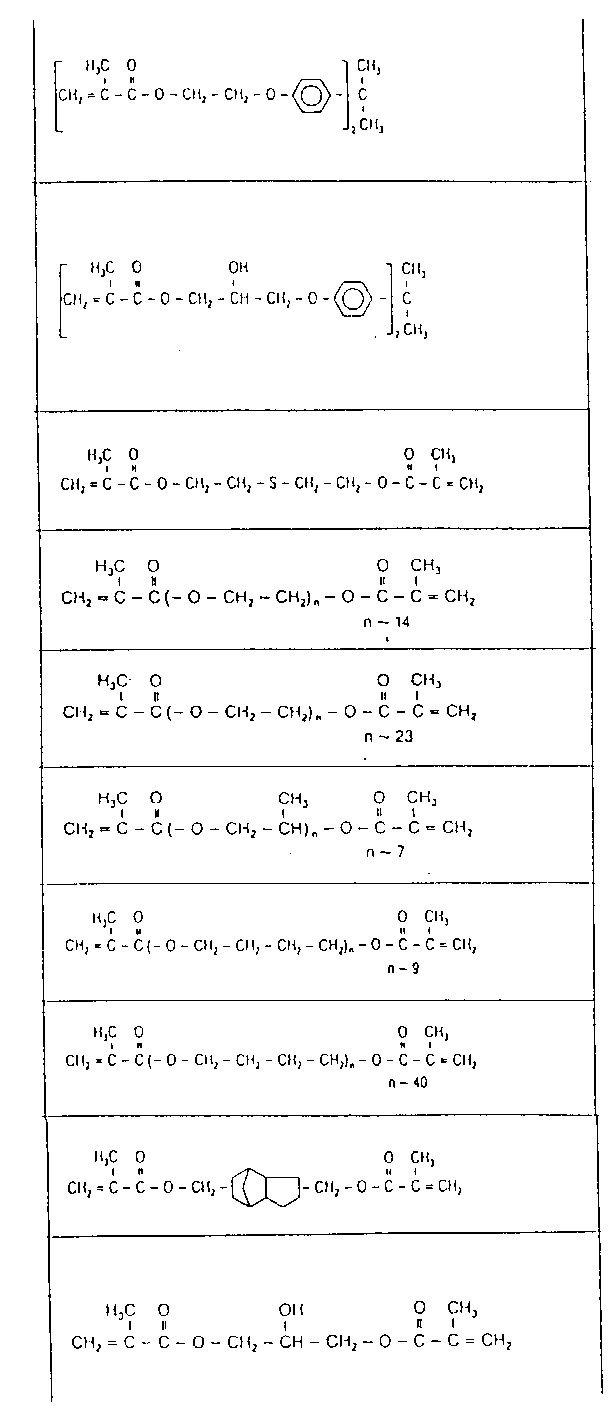

Bevorzugte Acrylate sind z.B. die Acrylsäureester von Trimethylolpropan, Pentaerythrit und Dipentaerythrit. Konkrete Beispiele hierfür sind Trimethylolpropantriacrylat (TMPTA), Pentaerythrittriacrylat (PETA), Pentaerythrittetraacrylat und Dipentaerythritpentaacrylat.

Weitere Beispiele für bevorzugte (Meth)acrylate sind solche der Formel 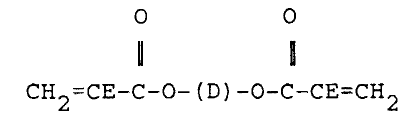 in der E für H oder CH₃ steht und D eine organische Gruppe ist, wie sie z. B. in den oben genannten speziellen Verbindungen und/oder in den in den folgenden Beispielen beschriebenen Verbindungen enthalten ist.

So kann sich D z.B. von C₂-C₆-Alkandiolen (z.B. Ethylenglykol, Propylenglykol, Butylenglykol, 1,6-Hexandiol), Polyethylenglykolen oder Polypropylenglykolen (z.B. solchen der Formel HO-(CH₂-CHR'''-O)ₙH, worin R''' H oder CH₃ und n = 2 - 10 ist) oder von gegebenenfalls substituiertem und/oder alkoxyliertem (z.B. ethoxyliertem und/oder propoxyliertem) Bisphenol A ableiten.

Die Silane der vorliegenden Erfindung können z. B. dadurch hergestellt werden, daß man
a) ein Silan der allgemeinen Formel (II):

   XₐR_{b}SiR'Y (II)

   in der X, R, R', a und b die vorstehend genannte Bedeutung haben, (a+b) = 3 und Y die Gruppe SH, PR"H oder POR"H bedeutet,
   einer Additionsreaktion mit einer Verbindung B' mit mindestens zwei C=C-Doppelbindungen unterwirft; oder
b) ein Silan der allgemeinen Formel (III):

   XₐR_{b}SiR'NCO (III)

   in der X, R, R', a und b die vorstehend genannte Bedeutung haben und (a+b) = 3, einer Kondensationsreaktion mit einer hydroxyl- oder amino-substituierten Verbindung B' mit mindestens zwei C=C-Doppelbindungen unterwirft; oder
c) ein Silan der allgemeinen Formel (IV):

   XₐR_{b}SiH (IV)

   in der X, R, a und b die vorstehend genannte Bedeutung haben und (a+b) = 3, einer Hydrosilylierungsreaktion mit einer Verbindung B' mit mindestens zwei Acrylat- und/oder Methacrylatgruppen unterwirft.

Die Silane der allgemeinen Formeln (II) bis (IV) sind entweder im Handel erhältlich oder lassen sich nach bekannten Methoden herstellen; vgl. W. Noll, "Chemie und Technologie der Silicone", Verlag Chemie GmbH, Weinheim/Bergstraße (1968).

Bei der Verfahrensvariante (a) erfolgt die Silanisierung über eine der C=C-Doppelbindungen der Verbindung B', wobei z.B. die Mercaptogruppe eines entsprechenden Silans im Sinne einer basisch katalysierten Michael-Reaktion unter Bildung einer Thioether-Einheit addiert wird:

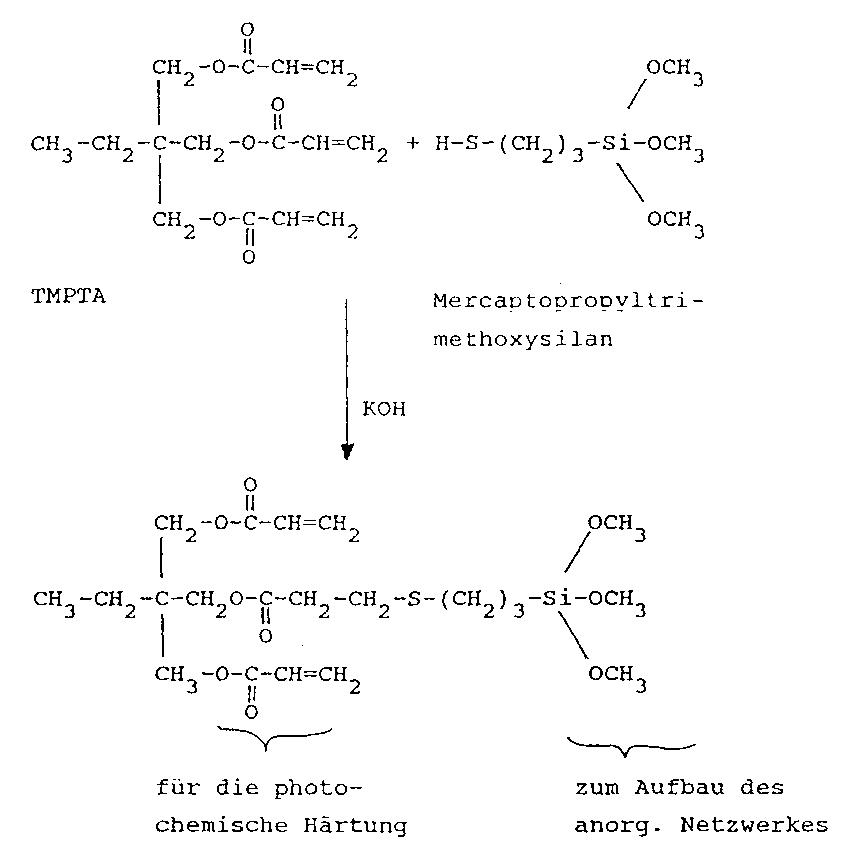

### Bild 1. Reaktionsprinzip der Thioladdition

Die Phosphinaddition erfolgt in analoger Weise.

Bei der Verfahrensvariante (b) entsteht durch Silanisierung der hydroxyl- (oder amino-)substituierten Ausgangsverbindung B' mit einem Isocyanatosilan eine Urethan- (oder Harnstoff-)Struktur:

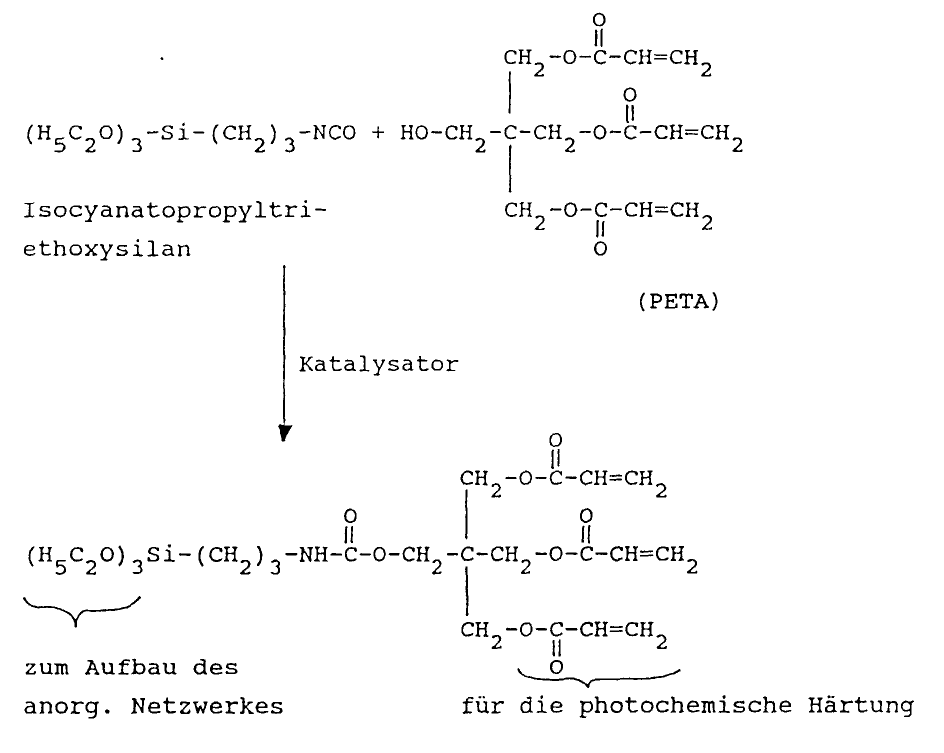

### Bild 2. Reaktionsprinzip der Urethanbildung

Bei der Verfahrensvariante (c) erfolgt die Hydrosilylierung schematisch nach folgender Reaktionsgleichung:

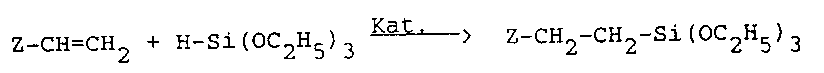

### (Verbindung B')

### Bild 3. Reaktionsprinzip der Hydrosilylierung

Die in dem entstehenden Silan enthaltenen hydrolysierbaren Gruppen (z.B. Alkoxygruppen) gewährleisten, daß ein anorganisches Netzwerk mit Si-O-Si-Einheiten aufgebaut werden kann, während die im Rest B enthaltene(n) Doppelbindung(en) unter Aufbau eines organischen Netzwerkes polymerisiert werden kann (können).

Zum Aufbau des anorganischen Netzwerkes werden die erfindungsgemäßen Silane gegebenenfalls unter Zusatz anderer cokondensierbarer Komponenten hydrolysiert und polykondensiert. Die Polykondensation erfolgt vorzugsweise nach dem Sol-Gel-Verfahren, wie es z. B. in den DE-A1 27 58 414, 27 58 415, 30 11 761, 38 26 715 und 38 35 968 beschrieben ist.

Zum Aufbau des organischen Netzwerkes werden die erfindungsgemäßen Silane gegebenenfalls unter Zusatz anderer copolymerisierbarer Komponenten, (z. B. der silanfreien Verbindungen B') polymerisiert. Die Polymerisation kann z. B. thermisch oder photochemisch unter Einsatz von Methoden erfolgen, wie sie in den DE-A1 31 43 820, 38 26 715 und 38 35 968 beschrieben sind.

In diesem Zusammenhang wird auch auf die Parallelanmeldung mit dem Titel "Polymerisierbare Kieselsäureheteropolykondensate und deren Verwendung" verwiesen, die unter Beanspruchung derselben Priorität wie die vorliegende Anmeldung gleichzeitig hiermit eingereicht wurde. Auf die Offenbarung dieser Parallelanmeldung wird ausdrücklich Bezug genommen.

Der Verlauf der anorganischen Vernetzung kann z. B. mittels Karl-Fischer-Titration (Bestimmung des Wasserverbrauchs bei der Hydrolyse), der Ablauf der photochemischen Härtung IR-spektroskopisch untersucht werden (Intensität und Relation der C=C und C=O Banden).

Die erfindungsgemäßen Silane stellen hochreaktive Systeme dar, die z. B. bei UV-Bestrahlung innerhalb von Sekundenbruchteilen zu mechanisch stabilen Überzügen bzw. Formkörpern aushärten.

Sie sind über einfache Additionsreaktionen herstellbar und können durch geeignete Auswahl der Ausgangsverbindungen eine variierbare Anzahl reaktiver Gruppen unterschiedlichster Funktionalität aufweisen. Bei Anwesenheit von zwei oder mehr C=C-Doppelbindungen ist die Ausbildung eines dreidimensionalen organischen Netzwerkes möglich. Ferner ist die Einführung anderer funktioneller Gruppen an vorhandenen C=C-Doppelbindungen denkbar, wobei die übrigen Doppelbindungen für eine organische Polymerisation zur Verfügung stehen.

Über den Abstand zwischen Silicium und funktioneller organischer Gruppe, d.h. über die Kettenlänge, und über die Anwesenheit weiterer funktioneller Gruppen in dieser Kette können die mechanischen (z. B. Flexibilität) und physikalisch-chemischen Eigenschaften (Adsorption, Farbe, Absorptionsverhalten, Brechzahl, Haftung etc.) der Produkte beeinflußt werden.

Durch die Ausbildung eines anorganischen Netzwerkes können je nach Art und Anzahl der hydrolysierbaren Gruppen (z. B. Alkoxygruppen) silicon- oder glasartige Eigenschaften eingestellt werden.

Die erfindungsgemäßen Silane besitzen ein relativ hohes Molekulargewicht und dementsprechend verminderte Flüchtigkeit gegenüber den herkömmlichen reinen Acrylat-Monomeren, so daß die toxische Gefährdung während der Verarbeitung und Applikation geringer ist. Bei der anorganischen und/oder organischen Vernetzung bilden sich Polysiloxane mit nochmals erniedrigter Flüchtigkeit, die damit das Toxizitätsproblem der Acrylatkomponenten völlig beheben.

Die Silane der vorliegenden Erfindung können verwendet werden entweder als solche oder - vorzugsweise nach vorheriger hydrolytischer (Vor-)kondensation - in Zusammensetzungen, die zusätzlich an den Verwendungszweck angepaßte Additive enthalten, z. B. übliche Lackadditive, Lösungsmittel, Füllstoffe, Photoinitiatoren, thermische Initiatoren, Verlaufmittel und Pigmente.

Die Silane oder die silanhaltigen Zusammensetzungen (einschließlich der entsprechenden Polykondensate) eignen sich z. B. zur Verwendung als bzw. in Beschichtungs-, Füllstoff- oder Bulkmaterialien, Klebstoffe(n), Haftvermittler(n) und Spritzgießmassen. Aufgrund ihres relativ hohen Molekulargewichts erfahren sie bei der Aushärtung nur eine geringe Schrumpfung. Beschichtungen und Formkörper aus den erfindungsgemäßen Silanen haben den Vorteil, daß sie photochemisch strukturierbar sind. Spezielle Anwendungsgebiete sind z. B. die Beschichtung von Substraten aus Glas, Holz, Metall, Kunststoff, Papier, Keramik etc. durch Tauchen, Gießen, Streichen, Spritzen, Walzen, Schleudern, elektrostatisches Spritzen, Elektrotauchlackierung etc. und der Einsatz für optische, optoelektrische oder elektronische Komponenten.

Die folgenden Beispiele erläutern die Erfindung, ohne deren Umfang zu beschränken.

In diesen Beispielen werden die folgenden Ausgangsmaterialien verwendet:
Silan I: HS-(CH₂)₃-SiCH₃(OCH₃)₂
Silan II: HS-CH₂-SiCH₃(OC₂H₅)₂
Silan III: HS-(CH₂)₃-Si(OCH₃)₃
Silan IV: HSiCH₃(OC₂H₅)₂
Silan V: HSi(OC₂H₅)₃
Silan VI: HSiCH₃Cl₂
Silan VII: HS-CH₂-Si(CH₃)₂OC₂H₅
Silan VIII: OCN-(CH₂)₃-Si(OC₂H₅)₃
Acrylat A: 1,6-Hexandioldiacrylat
Acrylat B: Tripropylenglykoldiacrylat
Acrylat C: 2,2-Di[4-(2-hydroxyethoxy)phenyl]propandiacrylat
Acrylat D: Di(trimethylolpropan)tetraacrylat
Acrylat E: 1,2,3-Tri(3-hydroxypropoxy) propantriacrylat
Acrylat F: Tris(2-hydroxyethyl) isocyanurat-triacrylat
Acrylat G: 2,2-Di[4-(2-hydroxyethoxy)phenyl]-propandimethacrylat
Acrylat H: 2,2-Di[3,5-dibrom-4-(2-hydroxyethoxy)phenyl]-propandimethacrylat
Acrylat I: Pentaerythrittetraacrylat
Acrylat J: Trimethylolpropantriacrylat
Acrylat K: Pentaerythrittriacrylat
Acrylat L: Dipentaerythritpentaacrylat
Acrylat M: Bisphenol-A-dimethacrylat
Acrylat N: Trimethylolpropantrimethacrylat
Acrylat O: Glycerin-1,3-dimethacrylat

### Beispiel 1

Herstellung der Verbindung der Formel

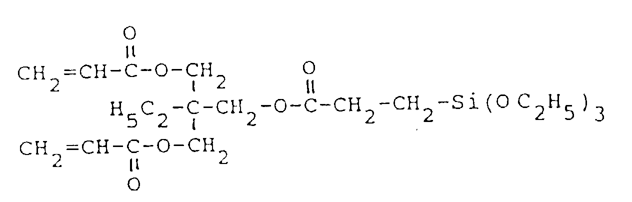

### Verbindung (1)

0,1 mol (29,5 g, 26,6 ml) Acrylat J werden in 100 ml Lösungsmittel (z. B. Ethanol, Benzol, Cyclohexan, Diethylether oder Methyl-tert-butylether) mit 0,1 mol (16,5 g, 18,8 ml) Silan V versetzt. Zu dieser Lösung gibt man 0,3 mmol (930 mg) des Katalysators [Rh(CO)Cl(PPh₂CH₂CH₂SiO_{1,5}].40 SiO₂ (BET-Oberfläche 723,5 m², mittlerer Porenradius 1,94 nm, mittleres Porenvolumen 0,70 cm³/g) und rührt unter Lichtausschluß bei 40±3°C bis im IR-Spektrum keine _{Si-H}-Schwingung mehr feststellbar ist (48 bis 72 Stunden). Nach Beendigung der Reaktion wird der Katalysator abgefrittet und das Lösungsmittel im Vakuum entfernt.

Ausbeute 43,5 g (94%) eines gelblichen, lichtempfindlichen Öls, Sdp. 202°C (Zers.).
- C₂₁H₃₆O₉Si: MG: 460,60
- Berechnet:: C 54,76% H 7,88%
- Gefunden:: C 56,02% H 7,69%
- ¹H-NMR (CDCl₃):: δ = 5,6-7,1 (m;-CH=CH₂;6H)
3,2-4,2 (m;-OCH₂-;12H)
2,0-2,5 (t;-CH₂COO-;2H)
0,3-1,8 (m;-CH₃,-CH₂-;16H)
- ²⁹Si-NMR (CDCl₃):: δ = -24,1 (s)

### Beispiel 2

Herstellung der Verbindung der Formel

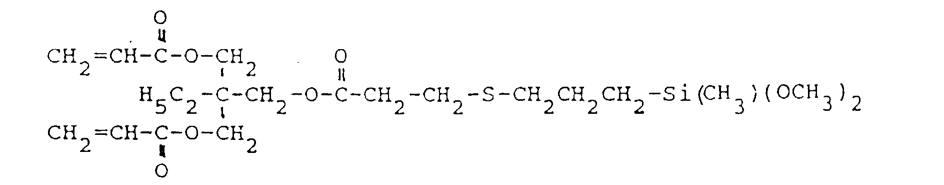

### (Verbindung 2)

0,15 mol (44,45 g) Acrylat J werden unter Kühlung in einem Wasserbad auf 20°C unter Stickstoffschutz vorgelegt und schnell mit 0,15 mol (27,05 g) Silan I sowie 0,0015 mol (0,0842 g) KOH in 6 g Ethanol versetzt. Das Reaktionsgemisch wird 5 Minuten gerührt (Iod-MercaptanTest), dann in 200 ml Diethylether aufgenommen und mit 20 ml H₂O so oft ausgeschüttelt und gewaschen, bis das Waschwasser neutral reagiert. Die Etherphase wird z. B. über Na₂SO₄ oder mit einem hydrophoben Filter getrocknet und im Wasserstrahlvakuum bei 35-40°C eingeengt. Anschließend trocknet man den Rückstand ca. 1 Stunde im Hochvakuum bei 35-40°C.

### Beispiel 3

Herstellung der Verbindung der Formel

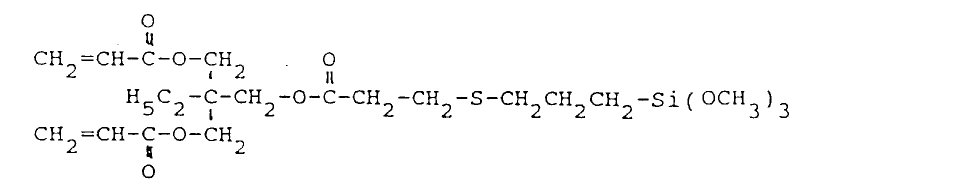

### (Verbindung 3)

Die Herstellung erfolgt wie in Beispiel 2 unter Verwendung einer äquimolaren Menge Silan III anstelle von Silan I.

### Beispiel 4

Herstellung der Verbindung der Formel

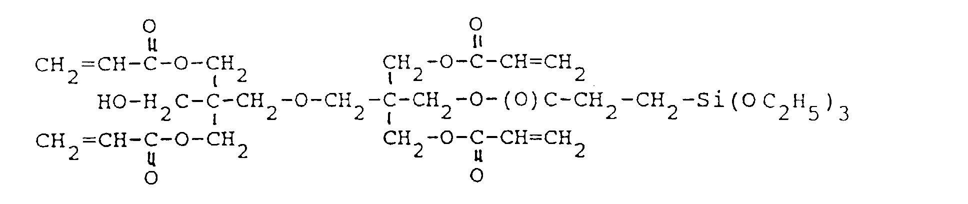

### (Verbindung 4)

Die Herstellung erfolgt wie in Beispiel 1 unter Verwendung einer äquimolaren Menge Acrylat L anstelle von Acrylat J. Man erhält ein gelbliches, lichtempfindliches Öl.
- C₃₁H₄₇O₁₅Si: MG: 687,80
- Berechnet:: C 54,14% H 6,89%
- Gefunden:: C 54,47% H 7,11%
- ¹H-NMR (CDCl₃):: δ = 5,8-6,9 (m;-CH=CH₂;12H)
3,3-4,7 (m;-OCH₂-;22H)
2,2-2,8 (m;-CH₂COO,-OH;3H)
1,2 (t;-OCH₂CH₃;9H)
1,0 (t;-SiCH₂-;2H)
- ²⁹Si-NMR (CDCl₃):: δ = -26,3 (s)

### Beispiel 5

Herstellung der Verbindung der Formel

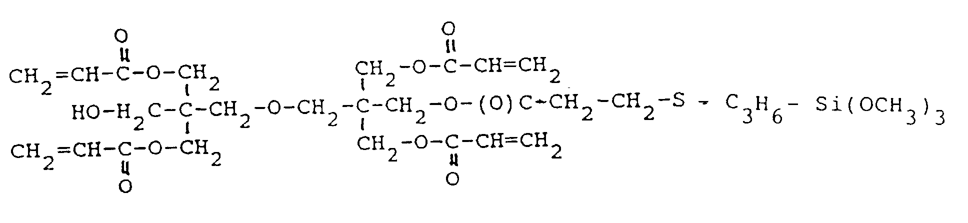

### (Verbindung 5)

Die Herstellung erfolgt wie in Beispiel 3 unter Verwendung einer äquimolaren Menge Acrylat L anstelle von Acrylat J.

### Beispiel 6

### Alternative Herstellung der Verbindung 2 von Beispiel 2

Zu 29,6 g (0,1 Mol) Acrylat J, in 50 ml Ethylacetat gelöst, werden bei 5°C (Eiskühlung) unter Stickstoffatmosphäre 18 g (0,1 Mol) Silan I zugegeben. Wiederum bei 5°C und unter Stickstoffatmosphäre wird die resultierende Mischung langsam (Zutropfen) mit 0,0561 (0,001 Mol) KOH, gelöst in 5 g Ethanol, versetzt. Dabei wird die Zugabegeschwindigkeit so eingestellt, daß die Temperatur der Reaktionsmischung deutlich unter 40°C bleibt. Nach einigen Minuten Rühren bei 5°C wird der Umsatz überprüft (bei Abwesenheit von freiem Mercaptosilan ist der Iod-Mercaptantest negativ). Nach Beendigung der Umsetzung wird die Reaktionsmischung mit 50 ml Ethylacetat versetzt und solange mit 30 ml-Portionen Wasser gewaschen, bis das Eluat neutral reagiert. Die organische Phase wird dann über Na₂SO₄ getrocknet oder über einen hydrophoben Filter filtriert, anschließend bei 30°C am Rotationsverdampfer eingeengt und schließlich bei 20-30°C im Hochvakuum getrocknet. Ausbeute 44 g = 93% (Feststoffgehalt 99%).

Nach den in den obigen Beispielen beschriebenen Verfahren wurden auch die folgenden erfindungsgemäßen Silane (1:1-Addukte) erhalten. Die Silane werden dabei durch eine römische Ziffer (Ausgangssilan) und einen Buchstaben (Ausgangsacrylat) gekennzeichnet:

| | |
|---|---|
| II-A | (Verbindung 6) |
| I-A | (Verbindung 7) |
| II-B | (Verbindung 8) |
| I-B | (Verbindung 9) |
| II-C | (Verbindung 10) |
| I-C | (Verbindung 11) |
| II-J | (Verbindung 12) |
| I-E | (Verbindung 13) |
| II-E | (Verbindung 14 |
| I-F | (Verbindung 15) |
| II-F | (Verbindung 16) |
| IV-A | (Verbindung 17) |
| V-A | (Verbindung 18) |
| VI-J | (Verbindung 19) |
| IV-J | (Verbindung 20) |
| V-L | (2:1 Addukt!) (Verbindung 21) |
| VII-J | (Verbindung 22) |
| I-M | (Verbindung 23) |
| I-H | (Verbindung 24) |
| I-D | (Verbindung 25) |
| III-K | (Verbindung 26) |
| I-I | (Verbindung 27) |
| I-L | (Verbindung 28) |
| I-G | (Verbindung 29) |
| I-N | (Verbindung 30) |

In der folgenden Tabelle sind typische IR-Schwingungsbanden von einigen der obigen Verbindungen zusammengestellt (aufgenommen als Film zwischen KBr-Platten). Ausbeuten sind ebenfalls angegeben, soweit sie bestimmt wurden.

### Beispiel 7

Herstellung der Verbindung der Formel

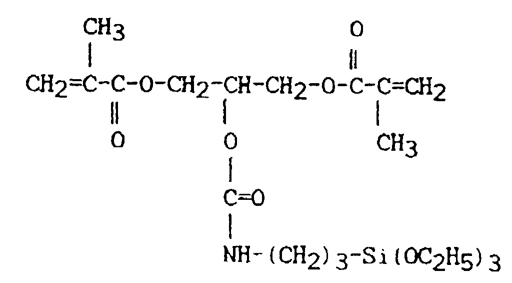

### (Verbindung 31)

Unter feuchtigkeitsfreier Atmosphäre werden zu 11,4 g (0,05 Mol) Acrylat 0 und 1,6 g (0,0025 Mol) Dibutylzinndidodecanoat (oder einer äquivalenten Menge von 1,4-Diazabicyclo[2.2.2]octan)12,4 g (0,05 Mol) Silan VIII langsam zugetropft. Dabei ist eine Erwärmung der Reaktionsmischung beobachtbar. Die Umsetzung ist nach ca. 1 h beendet (IR-Kontrolle, Abwesenheit freier NCO-Gruppen). Die Isolierung der gewünschten Verbindung kann in bekannter Weise erfolgen. IR (Film): 3380 (breitν_{N-H}), 1725 (ν_{c=o}) und 1640 (ν_{c=c}) cm⁻¹.

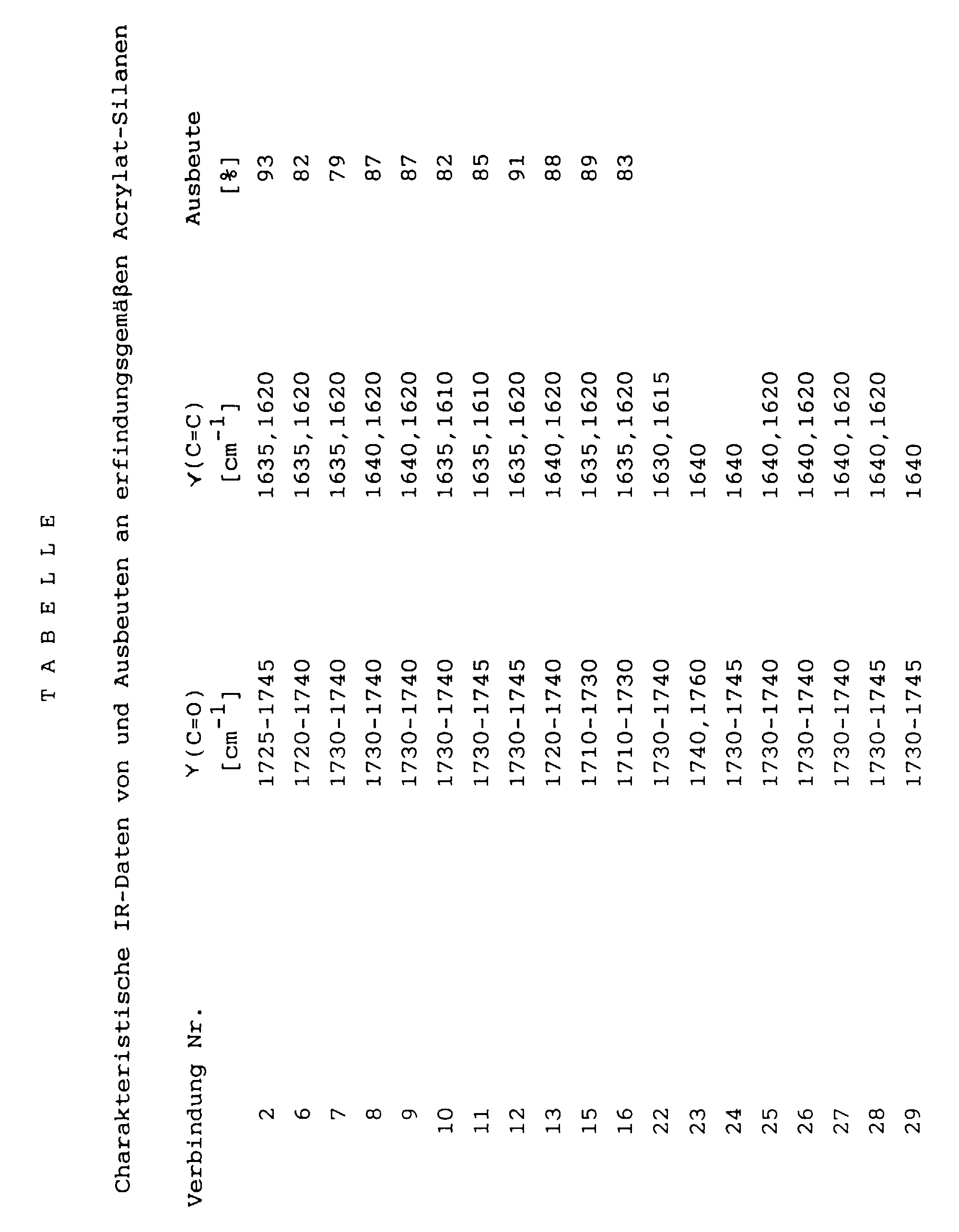

## Patentansprüche

1. Silane der allgemeinen Formel (I):
{XₐR_{b}Si[R'(A)_{c}]_{(0 oder 1)}}ₓB (I)
in der die Reste und Indices folgende Bedeutung haben:
X: Wasserstoff, Halogen, Hydroxy, Alkoxy, Acyloxy, Alkylcarbonyl, Alkoxycarbonyl oder -NR"₂;
R: Alkyl, Alkenyl, Aryl, Alkylaryl oder Arylalkyl;
R': Alkylen, Arylen oder Alkylenarylen;
R": Wasserstoff, Alkyl oder Aryl;
A: S, PR", POR", NHC(O)O oder NHC(O)NR";
B: geradkettiger oder verzweigter organischer Rest, der sich von einer Verbindung B' mit mindestens zwei C=C-Doppelbindungen und 5 bis 50 Kohlenstoffatomen ableitet, ausgenommen die Verbindung B' der Formel : CH₂=C(H,CH₃)-CONH-CH₂-NHCO-C(H,CH₃)=CH₂, wenn B direkt an das Si-Atom gebunden ist;
a: 1, 2 oder 3;
b: 0, 1 oder 2, wobei (a + b) = 3;
c: 0 oder 1;
x: ganze Zahl größer 0, deren Maximalwert der Anzahl von C=C-Doppelbindungen in der Verbindung B' minus 1 entspricht bzw. gleich der Anzahl von C=C-Doppelbindungen in der Verbindung B' ist, wenn c = 1 und A für NHC(O)NR" oder NHC(O)O steht;
erhältlich durch
a) eine Additionsreaktion eines Silans der allgemeinen Formel (II):
XₐR_{b}SiR'Y (II)
in der X, R, R', a und b die oben genannte Bedeutung haben und Y die Gruppe SH, PR"H oder POR"H bedeutet, mit der Verbindung B'; oder
b) eine Kondensationsreaktion eines Silans der allgemeinen Formel (III):
XₐR_{b}SiR'NCO (III)
in der X, R, R', a und b die oben genannte Bedeutung haben, mit einer Hydroxyl- oder Amino-substituierten Verbindung B'; oder
c) eine Hydrosilylierungsreaktion eines Silans der allgemeinen Formel (IV):
XₐR_{b}SiH (IV)
in der X, R, a und b die oben genannte Bedeutung haben, mit einer Verbindung B', bei der die C=C-Doppelbindungen Acrylat- und/oder Methacrylatgruppen sind,

2. Silane nach Anspruch 1, dadurch gekennzeichnet, daß in der allgemeinen Formel (I) die Reste und Indices die folgende Bedeutung haben:
X: (C₁-C₄)-Alkoxy, insbesondere Methoxy und Ethoxy; oder Halogen, insbesondere Chlor;
R: (C₁-C₄)-Alkyl, insbesondere Methyl und Ethyl;
R': (C₁-C₄)-Alkylen, insbesondere Methylen und Propylen;
A: S;
a: 1, 2 oder 3;
[R'(A)_{c}]_{(0 oder 1)}: [R'(A)_{c}]₀ für c = 0 und
[R'(A)_{c}]₁ für c = 1;
c: 0 oder 1, vorzugsweise 1;
B und x: wie in Anspruch 1 definiert.

3. Silane nach irgendeinem der Ansprüche 1 und 2, dadurch gekennzeichnet, daß die Einheit mit dem Index x ausgewählt ist aus Triethoxysilyl, Methyldiethoxysilyl, Methyldichlorsilyl, 3-Methyldimethoxysilyl-propythio, 3-Triethoxysilyl-propylthio, Ethoxydimethylsilyl-methylthio und Methyldiethoxysilyl-methylthio.

4. Silane nach irgendeinem der Ansprüche 1 bis 3, dadurch gekennzeichnet, daß die Verbindung B' mindestens drei C=C-Doppelbindungen enthält.

5. Silane nach irgendeinem der Ansprüche 1 bis 4, dadurch gekennzeichnet, daß die Verbindung B' als C=C-Doppelbindungen mindestens zwei oder mehr Acrylat- und/oder Methacrylatgruppen aufweist.

6. Silane nach irgendeinem der Ansprüche 1 bis 5, dadurch gekennzeichnet, daß B' ein Acrylsäureester von Trimethylolpropan, Pentaerythrit, Dipentaerythrit, C₂-C₆-Alkandiolen, Polyethylenglykolen, Polypropylenglykolen oder gegebenenfalls substituiertem und/oder alkoxyliertem Bisphenol A ist.

7. Silane nach irgendeinem der Ansprüche 1 bis 6, dadurch gekennzeichnet, daß x den Wert 1 oder 2 hat.

8. Verfahren zur Herstellung der Silane nach Anspruch 1, dadurch gekennzeichnet, daß man
a) ein Silan der allgemeinen Formel (II):
XₐR_{b}SiR'Y (II)
in der X, R, R', a und b die in Anspruch 1 genannte Bedeutung haben und Y die Gruppe SH, PR"H oder POR"H bedeutet, einer Additionsreaktion mit einer Verbindung B' mit mindestens zwei C=C-Doppelbindungen unterwirft; oder
b) ein Silan der allgemeinen Formel (III):
XₐR_{b}SiR'NCO (III)
in der X, R, R', a und b die in Anspruch 1 genannte Bedeutung haben, einer Kondensationsreaktion mit einer hydroxyl- oder amino-substituierten Verbindung B' mit mindestens zwei C=C-Doppelbindungen unterwirft; oder
c) ein Silan der allgemeinen Formel (IV):
XₐR_{b}SiH (IV)
in der X, R, a und b die in Anspruch 1 genannte Bedeutung haben, einer Hydrosilylierungsreaktion mit einer Verbindung B' mit mindestens zwei Acrylat- und/oder Methacrylatgruppen unterwirft.

9. Homo- oder Copolymere, dadurch gekennzeichnet, daß sie Struktureinheiten eines Silans gemäß irgendeinem der Ansprüche 1 bis 7 enthalten.

10. Homo- oder Cokondensate, dadurch gekennzeichnet, daß sie Struktureinheiten eines Silans gemäß irgendeinem der Ansprüche 1 bis 7 enthalten.

## Claims

1. Silanes with the general formula (I):
{XₐR_{b}Si[R'(A)_{c}]_{(0 or 1)}}ₓB (I)
in which the residues and indices have the following meanings:
X: hydrogen, halogen, hydroxy, alkoxy, acyloxy, alkylcarbonyl, alkoxycarbonyl or -NR"₂;
R: alkyl, alkenyl, aryl, alkylaryl or arylalkyl;
R': allkylene, arylene or alkylenearylene;
R": hydrogen, alkyl or aryl;
A: S, PR", POR", NCH(O)O or NCH(O)NR";
B: straight chain or branched organic residue which is derived from a compound B' with at least two C=C double bonds and 5 to 50 carbon atoms, with the exception of the compound B' of the formula: CH₂=C(H₁CH₃)-CONH-CH₂-NHCO-C(H₁CH₃)=CH₂ when B is bonded directly to the Si atom;
a: 1, 2 or 3;
b: 0, 1 or 2, where (a + b) = 3;
c: 0 or 1;
x: an integer greater than 0, whose maximum value corresponds to the number of C=C double bonds in the compound B' minus 1 or is equal to the number of C=C double bonds in the compound B', when c = 1 and A represents NHC(O)NR" or NHC(O)O;
obtainable by
a) an addition reaction of a silane with the general formula (II):
XₐR_{b}SiR'Y (II)
in which X, R, R', a and b have the meanings recited above and Y signifies the group SH, PR"H or POR"H, with the compound B'; or
b) a condensation reaction of a silane of the general formula (III):
XₐR_{b}SiR'NCO (III)
in which X, R, R', a and b have the meanings recited above, with a hydroxyl or amino substituted compound B'; or
c) a hydro-silylation reaction of a silane of the general formula (IV):
XₐR_{b}SiH (IV)
in which X, R, a and b have the meanings recited above, with a compound B', in which the C=C double bonds are acrylate and/or methacrylate groups.

2. A silane according to claim 1, characterized in that the residues and indices in the general formula (I) have the following meanings:
X: (C₁-C₄)-alkoxy, especially methoxy and ethoxy: or halogen, especially chlorine:
R: (C₁-C₄)-alkyl, especially methyl and ethyl;
R': (C₁-C₄)-alkylene, especially methylene and propylene;
A: S;
a: 1, 2 or 3;
R'(A)_{c}]_{(0 or 1)}: [[R'(A)_{c}]₀ for c = 0 and
[R'(A)_{c}]₁ for c = 1;
c: 0 or 1, preferably 1;
B and x: as defined in claim 1.

3. A silane according to either of claims 1 and 2, characterized in that the unit with the index x is selected from triethoxysilyl, methyldiethoxysilyl, methyldichlorsilyl, 3-methyldimethoxysilyl-propylthio, 3-triethoxysilyl-propylthio. ethoxydimethylsilyl-methylthio and methyldiethoxysilyl-methylthio.

4. A silane according to any of claims 1 to 3, characterized in that the compound B' includes at least three C=C double bonds.

5. A silane according to any of claims 1 to 4, characterized in that the compound B' has at least two or more acrylate and/or methacrylate groups as C=C double bonds.

6. A silane according to any of claims 1 to 5, characterized in that B' is an acrylic acid ester of trimethyloproane, pentaerythritol, di pentaerythritol, C₂ - C₆ alkanedioles, polyethyleneglycols, polypropyleneglycols or optionally substituted and/or alkoxylated bisphenol A.

7. A silane according to any of claims 1 to 6, characterized in that x has the value 1 or 2.

8. A method of producing the silanes according to claim 1, characterized in that
a) a silane of the general formula (II):
XₐR_{b}SiR'Y (II)
in which X, R, R', a and b have the meanings recited in claim 1 and Y signifies the group SH, PR"H or POR"H is subjected to an addition reaction with a compound B' with at least two C=C double bonds; or
b) a silane of the general formula (III):
XₐR_{b}SiRNCO (III)
in which X, R, R', a and b have the meanings recited in claim 1, is subjected to a condensation reaction with a hydroxyl or amino substituted compound B' with at least two C=C double bonds; or
c) a silane of the general formula (IV):
XₐR_{b}SiH (IV)
in which X, R, a and b have the meanings recited in claim 1 is subjected to a hydro-silylation reaction with a compound B' with at least two acrylate and/or methacrylate groups.

9. Homo or co-polymers, characterized in that they contain structural units of a silane according to any of claim 1 to 7.

10. Homo or co-condensates, characterized in that they contain structural units of a silane according to any of claim 1 to 7.

## Revendications

1. Silanes de formule générale :
{XₐR_{b}Si[R'(A)_{c}]_{(0 ou 1)}}ₓB (I)
dans laquelle les restes et les indices ont la signification suivante :
X : hydrogène, halogène, hydroxy, alkoxy, acyloxy, alkylcarbonyl, alkoxy carbonyl ou NR"₂,
R : alkyl, akényl, aryl, alkylaryl ou arylalkyl,
R': alkylène, arylène ou alkylènearylène
R": hydrogène, alkyl ou aryl
A : S, PR", POR", NHC(O)O ou NHC(O)NR"
B : reste organique à chaîne droite ou ramifié, qui dérive d'un composé B' ayant au moins deux double liaisons C=C et de 5 à 50 atomes de carbone,
à l'exception du composé B' de formule :
CH₂ = C(H,CH3)-CONH-CH₂-NHCO-C(H,CH₃)=CH₂
quand B est lié directement à l'atome de silicium:
a = 1,2 ou 3
b = 0,1 ou 2 pour lesquels (a+b)=3
C = 0 ou 1
x = un nombre entier plus grand que 0, dont la valeur maximale correspond au nombre de double liaisons dans le composé B' moins un, ou est égal au nombre de double liaisons C=C dans le composé B', lorsque c=1 et que A représente NHC(O)NR" OU NHC(O)O,
accessibles par,
a) une réaction d'addition d'un silane de formule générale (II),
XₐR_{b}SiR'Y (II)
dans laquelle X, R, R', a et b ont les significations mentionnées ci-dessus et Y signifie le groupe SH, PR"H, ou POR"H, avec le composé B', ou
b) une réaction de condensation d'un silane de formule générale (III)
XₐR_{b}SiR'NCO (III)
dans laquelle X, R, R', a et b ont les significations citées ci-dessus, avec un composé B' substitué par un hydroxyle ou par un amino-, ou
c) une réaction d'hydrosilylation d'un silane de formule générale (IV)
XₐR_{b}SiH (IV)
dans laquelle X, R, a et b ont les significations citées ci-dessus, avec un composé B' dans lequel les double liaisons C=C sont des groupes acrylate et/ou méthacrylate.

2. Silanes selon la revendication 1,
caractérisés en ce que
dans la formule générale (I) les restes et les indices ont les significations suivantes :
X : alkoxy en C₁-C₄, en particulier méthoxy et éthoxy ou halogène, en particulier chlore ;
R : alkyle en C₁-C₄, en particulier méthyle et éthyle ;
R': alkylène en C₁-C₄, en particulier méthylène et propylène,
A : S ;
a : 1,2 ou 3
[R' (A)_{c}]_{0 ou 1} : [R' (A)_{c}]₀ pour c=0 et [R' (A)_{c}]₁ pour c=1
c : 0 ou 1, de préférence 1 ;
B et x : définis comme à la revendication 1.

3. Silanes selon l'une quelconque des revendications 1 et 2,
caractérisés en ce que
l'élément ayant l'indice x est choisi parmi le triéthoxysilyle, le methyldiéthoxysilyle, le methyldichlorosilyle, le 3-methyldiméthoxysilyle-propylthio, le 3-triméthoxysilyl-propylthio, le methyldiéthoxysilylméthylthio et l'ethoxydiméthylsilyl-méthylthio.

4. Silanes selon l'une quelconque des revendications 1 à 3,
caractérisés en ce que
le composé B' contient au moins trois double liaisons C=C.

5. Silanes selon l'une quelconque des revendications 1 à 4,
caractérisés en ce que
le composé B' possède en tant que double liaisons C=C, au moins deux ou plus groupes acrylate et/ou méthacrylate.

6. Silanes selon l'une quelconque des revendications 1 à 5,
caractérisés en ce que B' est un ester d'acide acrylique de ditriméthylolpropane, de pentaerythritol, de dipentaerythritol, d'alkanediols en C₂-C₆, de polyéthylèneglycols, de polypropylèneglycols, ou de bisphénol A éventuellement substitué et/ou alkoxylé.

7. Silanes selon l'une quelconque des revendications 1 à 6,
caractérisés en ce que
x a la valeur 1 ou 2.

8. Procédé de préparation des silanes selon la revendication 1,
caractérisé en ce qu'
on soumet
a) un silane de formule générale II
XₐR_{b}SiR'Y (II)
dans laquelle X, R, R', a et b ont les significations citées à la revendication 1, et Y signifie le groupe SH, PR" H ou POR" H, à une réaction d'addition avec un composé B' ayant au moins deux double liaisons C=C, ou
b) un silane de formule générale (III)
XₐR_{b}SiR'NCO (III)
dans laquelle X, R, R', a et b ont les significations citées à la revendication 1, à une réaction de condensation avec un composé B' substitué par un hydroxyle ou par un amine, et ayant au moins deux double liaisons C=C; ou
c) un silane de formule générale (IV),
XₐR_{b}SiH
dans laquelle X, R, a et b ont les significations citées à la revendication 1, à une réaction d'hydrosilylation avec un composé B' ayant au moins deux groupes acrylate et/ou méthacrylate.

9. Homo- ou copolymères,
caractérisés en ce qu'
ils contiennent des éléments de structure d'un silane selon l'une quelconque des revendications 1 à 7.

10. Homo- et co-condensats,
caractérisés en ce qu'
ils contiennent des éléments de structure d'un silane selon l'une quelconque des revendications 1 à 7.
